# EUROPÄISCHE PATENTSCHRIFT

(11) **EP 0 492 381 B1**
(45) Veröffentlichungstag und Bekanntmachung des Hinweises auf die Patenterteilung: **27.03.1996**
(21) Anmeldenummer: 91121671.1
(22) Anmeldetag: 18.12.1991
(51) Int. Cl.: G01B 11/14

(54) **Verfahren zur Spitzenspielmessung an Turbinenschaufeln**
Method of measuring clearance of turbine blades
Méthode pour mesurer le jeu des aubes de turbine

(30) Priorität: 21.12.1990 DE 4041343
(43) Veröffentlichungstag der Anmeldung: 01.07.1992
(73) Patentinhaber: BMW Rolls-Royce GmbH, D-61402 Oberursel (DE)
(72) Erfinder: Haselbauer, Franz, W-6309 Münzenberg 1 (DE)
(74) Vertreter: Bücken, Helmut

(56) Entgegenhaltungen:
- EP-A- 0 198 557
- DE-A- 2 730 508
- GB-A- 2 178 165
- US-A- 4 766 323

## Beschreibung

Die Erfindung betrifft ein Verfahren zur Bestimmung des Spitzenspiels an Turbinenschaufeln, wobei von einem im Turbinengehäuse angeordneten Sender Lichtwellen ausgesandt werden, die von den Turbinenschaufeln reflektiert und von einem neben dem Sender im Gehäuse liegenden Empfänger empfangen werden, und wobei der zeitliche Intensitätsverlauf der reflektierten Lichtwellen elektronisch ausgewertet wird und geht aus von der DE-A-27 30 508.

Bei Turbinen wird angestrebt, das Spitzenspiel zwischen den Schaufeln sowie dem Gehäuse möglichst gering zu halten, um einen guten Wirkungsgrad zu erzielen. Es ist bekannt, das Spitzenspiel mittels geeigneter Maßnahmen (beispielsweise Beheizen oder Abkühlen der Gehäusewand) zu regulieren. Hierzu ist es erforderlich, das aktuelle Spitzenspiel kontinuierlich zu messen. Auch hierfür sind eine Vielzahl von Meßverfahren bekannt. Genannt seien beispielsweise kapazitive Meßverfahren, oder ein in der DE-A-24 48 219 beschriebenes Verfahren, bei dem aus der Ablenkung eines auf die Turbinenschaufeln gerichteten Laserstrahles unter Berücksichtigung der Drehgeschwindigkeit der Turbine das aktuelle Spitzenspiel berechnet wird. In vergleichbarer Weise muß auch bei dem aus der DE-A 27 30 508 bekannten Verfahren eine Impulsdauer gemessen werden, d. h. bei den bisher bekannten Verfahren sind stets aufwendige Drehzahl- oder Zeitmessungen erforderlich.

Ein zuverlässsiges und dabei gegenüber dem bekannten Stand der Technik deutlich einfacheres Verfahren zur Bestimmung des Spitzenspieles an Turbinenschaufeln aufzuzeigen, ist Aufgabe der vorliegenden Erfindung. Zur Lösung dieser Aufgabe ist vorgesehen, daß die Reflexion an den beiden Seitenflächen einer Turbinenschaufel mit der Reflexion an der Schaufel-Stirnfläche verglichen wird, wobei der Intensitätsverlauf mit zwei Peaks, verursacht durch die Reflexion an den Seitenflächen, sowie mit einer dazwischenliegenden geringeren Reflexions-Intensität, verursacht durch die Stirnfläche, ein Maß für das gewünschte Spitzenspiel ist.

Näher erläutert wird die Erfindung anhand eines bevorzugten, lediglich prinzipiell dargestellten Ausführungsbeispieles. In diesem Ausführungsbeispiel, das stellvertretend für einen allgemein Lichtwellen (beispielsweise im UV-Bereich oder im Infrarot-Bereich) aussendenden Sender eine optische Lichtquelle enthält, zeigt
- Fig. 1: eine Anordnung des Senders und Empfängers im Turbinengehäuse über den Schaufelspitzen,
- Fig. 2: den Schnitt B-B aus Fig. 1, sowie
- Fig. 3: charakteristische Zeitverläufe der Intensität bei verschiedenen Spitzenspielen.

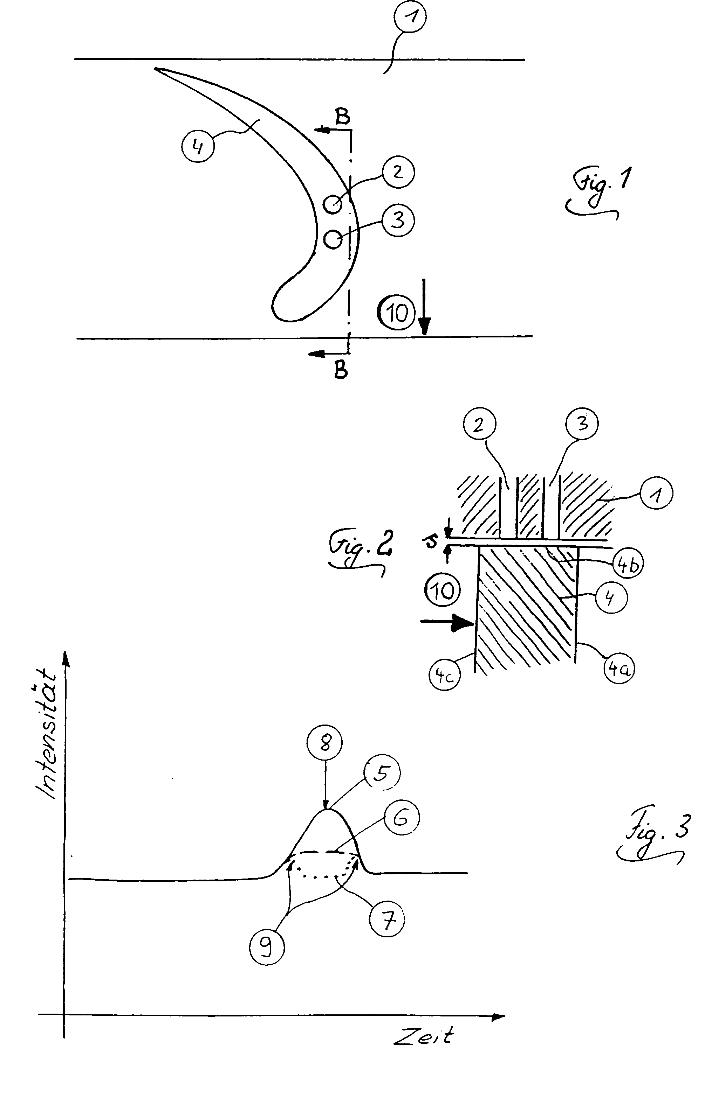

In einem Turbinengehäuse 1 ist mindestens ein als Lichtquelle ausgebildeter optischer Sender 2 sowie ein als Fotozelle ausgebildeter Empfänger 3 so installiert, wie in den Fig. 1, 2 dargestellt. Im Turbinengehäuse laufen eine Vielzahl von Turbinenschaufeln gemäß Pfeilrichtung 10 um. Lediglich eine dieser Turbinenschaufeln ist abstrakt dargestellt und mit der Bezugsziffer 4 bezeichnet.

Es soll das mit dem Buchstaben s benannte und aus Fig. 2 ersichtliche Spitzenspiel, d. h. der Abstand zwischen der Spitze der Turbinenschaufel 4 und der Wand des Turbinengehäuses 1, überwacht werden. Hierzu wird erfindungsgemäß der zeitliche Verlauf der vom Sender 2 abgestrahlten und vom Empfänger 3 empfangenen Lichtwellen-Intensität zumindest jeweils über einer Turbinenschaufel 4 ausgewertet. Verschiedene mögliche Intensitäts-Zeitverläufe sind in Fig. 3 dargestellt. Die Abszisse des dort gezeigten Diagrammes stellt die Zeitachse dar, während auf der Ordinate die Intensität der reflektierten Impulse/Lichtwellen aufgetragen ist. Die einzelnen Verläufe 5, 6, 7 werden im folgenden erläutert, wozu die Bewegung der Turbinenschaufel 4 gemäß Pfeilrichtung 10 in Teilschritte unterteilt wird. Für diese Erläuterung sind die Seitenflächen bzw. die Stirnfläche der Turbinenschaufel 4 mit den Bezugsziffern 4a, 4b, 4c versehen.

Der Intensitäts-Verlauf 5 stellt sich bei einem relativ großen Spitzenspiel s ein. Hier nähert sich die Turbinenschaufel 4 mit ihrer Seitenfläche 4a dem Sender 2, wodurch zunächst eine geringe Menge von ausgesandtem Licht zum Empfänger 3 reflektiert wird. Kommt schließlich die Stirnfläche 4b unterhalb des Senders 2 zum Liegen, so gelangt eine deutlich größere Menge reflektierten Lichtes zum Empfänger 3, wodurch dieser den mit der Bezugsziffer 8 bezeichneten Intensitäts-Peak empfängt. Mit Forteilen der Turbinenschaufel 4 schließlich erfolgt wiederum eine geringere Reflexion über die Seitenfläche 4c.

Beim Intensitäts-Verlauf gemäß Bezugsziffer 6 ist das Spitzenspiel hingegen geringer, so daß über die Stirnfläche 4b lediglich eine geringe Menge von Streulicht vom Sender 2 zum Empfänger 3 reflektiert wird.

Noch geringer ist das Spitzenspiel s beim Intensitäts-Verlauf mit der Bezugsziffer 7. Hier empfängt der Empfänger 3 bei Annäherung der Turbinenschaufel 4 an den Sender 2 zunächst das über die Seitenfläche 4a reflektierte Licht, wodurch sich der erste Intensitäts-Peak 9 ergibt. Anschließend daran gelangt die Turbinenschaufel 4 mit ihrer Stirnfläche 4b unter den Empfänger 3 und deckt diesen vollständig ab, so daß kein reflektiertes Licht wahrgenommen werden kann. Erst nachdem die Turbinenschaufel 4 auch den Empfänger 3 passiert hat, erkennt dieser wieder das über die Seitenfläche 4c reflektierte Licht, wobei der zweite Intensitäts-Peak 9 erzeugt wird. Dieser charakteristische zeitliche Intensitäts-Verlauf gemäß Bezugsziffer 9 dient als Hinweis darauf, daß das gewünschte Spitzenspiel s vorliegt. Dieser Verlauf 7 mit dem Doppel-Peak 9 unterscheidet sich so wesentlich von den Verläufen 6, 5, daß keine komplizierte Auswerteschaltung erforderlich ist. Vielmehr kann eine einfache elektronische Analyse beispielsweise nach Fourier erfolgen.

Das erfindungsgemäße Verfahren der zeitlichen Auswertung eines Intensitäts-Verlaufes zeichnet sich aber nicht nur durch die relativ einfache Auswertelogik aus, sondern hat darüber hinaus den Vorteil, daß lediglich der relative Intensitäts-Verlauf analysiert wird, die absolute Höhe der Reflexions-Intensität jedoch ohne Belang bleibt. Der zeitliche Intensitäts-Verlauf bleibt somit beispielsweise unabhängig vom Verschmutzungsgrad- und zumindest im interessanten Bereich - von der Umgebungstemperatur. Auch bleibt bei einer veränderlichen Turbinendrehzahl deren absolute Größe ohne Einfluß. Der charakteristische Kurvenverlauf bei der zeitlichen Intensitätsauswertung ist somit lediglich von den geometrischen Verhältnissen am Einbauort der Meßeinrichtung (Sender 2, Empfänger 3) abhängig.

## Patentansprüche

1. Verfahren zur Bestimmung des Spitzenspiels an Turbinenschaufeln, wobei von einem im Turbinengehäuse (1) angeordneten Sender (2) Lichtwellen ausgesandt werden, die von den Turbinenschaufeln (4) reflektiert und von einem neben dem Sender (2) im Turbinengehäuse (1) liegenden Empfänger (3) empfangen werden, und wobei der zeitliche Intensitätsverlauf (5, 6, 7) der reflektierten Lichtwellen elektronisch ausgewertet wird,
dadurch gekennzeichnet, daß die Reflexion an den beiden Seitenflächen (4a, 4c) einer Turbinenschaufel (4) mit der Reflexion an der Schaufel-Stirnfläche (4b) verglichen wird, wobei der Intensitätsverlauf (7) mit zwei Peaks (9), verursacht durch die Reflexion an den Seitenflächen (4a, 4c), sowie mit einer dazwischenliegenden geringeren Reflexions-Intensität, verursacht durch die Stirnfläche (4b), ein Maß für das gewünschte Spitzenspiel ist.

## Claims

1. A process for determining the clearance of turbine blades, whereby light waves are emitted from a transmitter (2) arranged within the turbine housing (1), which are reflected by the turbine blades (4) and received by a receiver (3) situated alongside the transmitter (2) within the turbine housing (1), and whereby the time-intensity curves (5, 6, 7) of the reflected light waves are electronically evaluated,
characterised in that the reflection from the two side surfaces (4a, 4c) of a turbine blade (4) is compared with the reflection from the tip surface (4b), whereby the intensity curve (7) with two peaks (9), caused by the reflections from the side surfaces (4a, 4c) and with an smaller intensity of reflection coming between them, caused by the tip surface (4b), is a measure for the required clearance.

## Revendications

1. Procédé pour déterminer le jeu des aubes d'une turbine, dans lequel des ondes lumineuses sont émises par un émetteur (2) disposé dans le carter de la turbine (1), ondes lumineuses qui sont réfléchies par les aubes (4) de la turbine et sont reçues par un récepteur (3) se trouvant à côté de l'émetteur (2) dans le carter de la turbine (1) et dans lequel on exploite l'évolution dans le temps de l'intensité (5, 6, 7) des ondes lumineuses réfléchies, procédé caractérisé en ce que l'on compare la réflexion sur les deux faces latérales (4a, 4c) d'une aube (4) de la turbine à la réflexion sur la face frontale (4b) de l'aube, l'évolution de l'intensité (7) avec deux pics (9), causés par la réflexion sur les faces latérales (4a, 4c), ainsi qu'avec une intensité de réflexion plus faible se trouvant dans l'intervalle, causée par la face frontale (4b) constitue une mesure du jeu souhaité.
